# EUROPÄISCHE PATENTSCHRIFT

(11) **EP 3 069 827 B1**
(45) Veröffentlichungstag und Bekanntmachung des Hinweises auf die Patenterteilung: **26.07.2017**
(21) Anmeldenummer: 16159446.0
(22) Anmeldetag: 09.03.2016
(51) Int. Cl.: B25B 29/02

(54) **SPANNVORRICHTUNG ZUM DEHNEN EINES GEWINDEBOLZENS**
CLAMPING DEVICE FOR STRETCHING A THREADED BOLT
DISPOSITIF DE SERRAGE POUR L'ETIREMENT D'UN BOULON FILETE

(30) Priorität: 19.03.2015 DE 102015104133
(43) Veröffentlichungstag der Anmeldung: 21.09.2016
(73) Patentinhaber: Hohmann, Jörg, 59872 Meschede (DE); Hohmann, Frank, 59581 Warstein (DE)
(72) Erfinder:
(74) Vertreter: Bungartz Christophersen Partnerschaft mbB Patentanwälte

(56) Entgegenhaltungen:
- EP-A1- 2 353 773
- DE-A1- 2 130 507
- DE-A1- 2 328 444

## Beschreibung

Die Erfindung betrifft eine Spannvorrichtung zum Dehnen eines Gewindebolzens durch Zug an dessen Gewindeendabschnitt, mit einem gegen eine feste Unterlage (8) als Widerlager abgestützten Zylindergehäuse (1) mit mindestens einem darin in Längsrichtung bewegbaren, mit einer Hydraulikversorgung verbindbaren Kolben (15), und mit einer Wechselbuchse (10), die zentral durch den Kolben (15) hindurchführt, an ihrem Ende mit einem Innengewinde (11) mit einer auf den Gewindeendabschnitt aufschraubbaren Traglänge (L1), sowie mit einem radial erweiterten Abschnitt (25) zur axialen Mitnahme durch eine an dem Kolben (15) ausgebildete Mitnehmerfläche (21) versehen ist und die Wechselbuchse (10) längsbeweglich zu dem Kolben (15) ist, wobei der Längsweg (L2) der Wechselbuchse (10) einerseits durch die Mitnehmerfläche (21) als ersten Längsanschlag und andererseits durch einen zweiten Längsanschlag (22) begrenzt ist, und der Längsweg (L2) mindestens gleich und vorzugsweise größer als die Traglänge (L1) des Innengewindes (11) der Wechselbuchse (10) ist.

Solche Bolzenspannvorrichtungen sind unter anderem aus der DE 2 328 444 A1 und der DE 2 130 507 A1 bekannt. Die dort offenbarten Schraubenanzugsgeräte können simultan Zugkraft und ein Drehmoment auf eine Schraube ausüben. Der dort beschriebene Zugbolzen hat die Funktion einer Wechselbuchse.

Eine hydraulisch arbeitende Bolzenspannvorrichtung mit ähnlichen Merkmalen ist aus der WO 2008/092768 A2 bekannt. Zum Dehnen des Gewindebolzens ist in dem Zylindergehäuse der Spannvorrichtung eine Wechselbuchse angeordnet, die an ihrem unteren Ende mit einem Innengewinde zum Verschrauben mit dem Gewindebolzen versehen ist. Die Wechselbuchse ist durch einen hydraulisch beaufschlagten Kolben der Spannvorrichtung axial mitnehmbar, und hierzu mit einem radial erweiterten Flansch bzw. Bund versehen. Eine Bolzenspannvorrichtung mit gleich zwei Wechselbuchsen, die axial zueinander verschiebbar sind, ist aus der EP 2 353 773 A1 bekannt.

Weiterhin sind Bolzenspannvorrichtungen mit mehreren Wechselbuchsen bekannt, beispielsweise aus der DE 10 2010 006 562 A1. Die innere Wechselbuchse ist dabei in axialer Richtung relativ zur äußeren Wechselbuchse verschiebbar und gegen die äußere Wechselbuchse federvorgespannt. Nach dem Aufschrauben der Wechselbuchsen erfolgt die axiale Spannung des Bolzens über zwei hydraulisch betriebene Kolben, welche die äußere und die innere Wechselbuchse gleichzeitig in axialer Richtung bewegen. Die Gesamt-Vorspannkraft wird durch je ein Gewinde der inneren bzw. der äußeren Wechselbuchse auf zwei separate Gewinde des Bolzens übertragen.

Auch bei einer aus der WO 2010/054959 A1 bekannten Bolzenspannvorrichtung erfolgt das axiale Dehnen des Gewindebolzens mittels einer in das Gewinde des Gewindebolzens eingreifenden Wechselbuchse. Diese ist durch in Reihe angeordnete Kolben der Spannvorrichtung axial mitnehmbar, indem die Wechselbuchse nahe ihres oberen Endes mit einem Gewinde versehen ist, auf das ein von dem obersten Kolben untergriffener Flansch oder Bund aufgeschraubt ist. Eine um die Wechselbuchse herum angeordnete Federanordnung stützt sich gegen den Bund und zusätzlich gegen die Wechselbuchse ab, so dass diese stets gegen den obersten Kolben anliegt. Um die Wechselbuchse auf den Gewindebolzen aufzuschrauben, wird die Spannvorrichtung von oben her auf den Gewindebolzen aufgesetzt und um ihre Achse gedreht, wodurch die Wechselbuchse auf den freien Gewindeabschnitt des Gewindebolzens aufgeschraubt wird.

Ein solches Aufschrauben unter Drehen der Spannvorrichtung um ihre Achse ist zeitaufwendig und angesichts des Gewichts derartiger Schraubenspannvorrichtungen auch mühsam. Außerdem führt das Aufsetzen der schweren Spannvorrichtung zu einem unter Umständen heftigen, unkontrollierten Stoßkontakt zwischen dem Gewindeabschnitt der Wechselbuchse und dem Gewindebolzen, wodurch es zu Beschädigungen an den beteiligten Gewinden kommen kann.

Der Erfindung liegt die **Aufgabe** zugrunde, durch konstruktive Maßnahmen an der Spannvorrichtung einen vorzeitigen Kontakt der Wechselbuchse mit dem Schraubenbolzen während des Aufsetzens des Schraubenspannzylinders zu vermeiden und so zu verhindern, dass es zu Beschädigungen an den beteiligten Gewinden kommen kann.

Hierzu ist eine gattungsgemäße Spannvorrichtung dadurch gekennzeichnet, dass die Wechselbuchse unter der Kraft einer Feder gegen den zweiten Längsanschlag abgestützt ist.

Mit einer so ausgestalteten Spannvorrichtung kann es beim Aufsetzen der Spannvorrichtung zu keinem vorzeitigen Kontakt zwischen dem Gewinde an der Wechselbuchse und dem Gewinde an dem Gewindebolzen kommen, so dass ungewollte Schädigungen an den beteiligten Gewinden in dieser Montagesituation vermieden werden. Erfindungsgemäß ist die Wechselbuchse unter der Kraft einer Feder gegen den zweiten Längsanschlag abgestützt. Die Feder führt dazu, dass die Wechselbuchse selbsttätig eine Grundstellung innerhalb der Schraubenspannvorrichtung einnimmt, in der sie so weit nach oben zurückgezogen ist, dass es beim Aufsetzen des Schraubenspannzylinders auf den Gewindebolzen noch zu keinem Kontakt der Wechselbuchse mit dem Gewindeende des Gewindebolzens kommt. Nur gegen die Kraft der Feder lässt sich die Wechselbuchse zu dem Gewindebolzen hin bewegen, um erst dann durch Eingriff der beteiligten Gewinde die Wechselbuchse auf den Gewindeendabschnitt des Gewindebolzens aufzuschrauben.

Gemäß einer weiteren Ausgestaltung ist die die Wechselbuchse zurückhaltende Feder eine Schraubenfeder, welche einen Längsabschnitt der Wechselbuchse umgibt und mit ihrem ersten Ende gegen die Wechselbuchse abgestützt ist. Vorzugsweise ist die Feder mit ihrem zweiten Ende gegen eine Fläche an dem Zylindergehäuse abgestützt. Vorzugsweise ist außerdem das erste Ende der Feder gegen einen Bund abgestützt, mit dem die Wechselbuchse an ihrem dem Innengewinde abgewandten Ende versehen ist. Dieser Bund kann an einem Endstück ausgebildet sein, welches an der Wechselbuchse befestigt ist, vorzugsweise über eine Verschraubung.

Gemäß einer weiteren Ausgestaltung ist der Kolben der Spannvorrichtung zur Aufnahme des radial erweiterten Abschnitts der Wechselbuchse mit einem Hohlraum von solcher Länge versehen, dass der erweiterte Längsabschnitt darin über den Längsweg der Wechselbuchse beweglich ist. Der Hohlraum ist in diesem Fall von einer Wandung des Kolbens umschlossen, die sich bis zu einer Stirnfläche erstreckt, wobei eine Feder gegen diese Stirnfläche einerseits und gegen das Zylindergehäuse andererseits abgestützt ist. Die Außenseite der Wandung ist vorzugsweise zylindrisch, und sie bildet mit der Innenwand des Zylindergehäuses eine Längsführung des Kolbens.

Eine weitere Ausgestaltung ist durch eine an dem Zylindergehäuse befestigte Hülse gekennzeichnet, welche einen dem Innengewinde abgewandten Endabschnitt der Wechselbuchse umgibt, wobei der Endabschnitt einerseits und die Hülse andererseits mit aufeinander bezogenen Markierungen versehen sind. Die Markierung an der Wechselbuchse ist vorzugsweise eine optische Markierung, z. B. eine Farb- oder eine Kontrastmarkierung, und die Markierung an der Hülse ist vorzugsweise ein Sichtfenster in der Hülse. Bei dieser Ausgestaltung ist die optische Markierung in dem Sichtfenster nur dann von außen sichtbar, wenn die Wechselbuchse an der Mitnehmerfläche anliegt, und der Spannprozess daher beginnen kann.

Weitere Einzelheiten und Vorteile ergeben sich aus der nachfolgenden Beschreibung eines auf der Zeichnung dargestellten Ausführungsbeispiels. Es zeigen:
- Fig. 1: in vereinfachter Schnittdarstellung eine hydraulisch arbeitende Gewindebolzen-Spannvorrichtung, angesetzt in Fluchtung zu einem Gewindebolzen und abgestützt auf einer Unterlage;
- Fig. 2: dieselbe Gewindebolzen-Spannvorrichtung in einer fortgeschrittenen Montagesituation, und
- Fig. 3: dieselbe Gewindebolzen-Spannvorrichtung während des Spannprozesses.

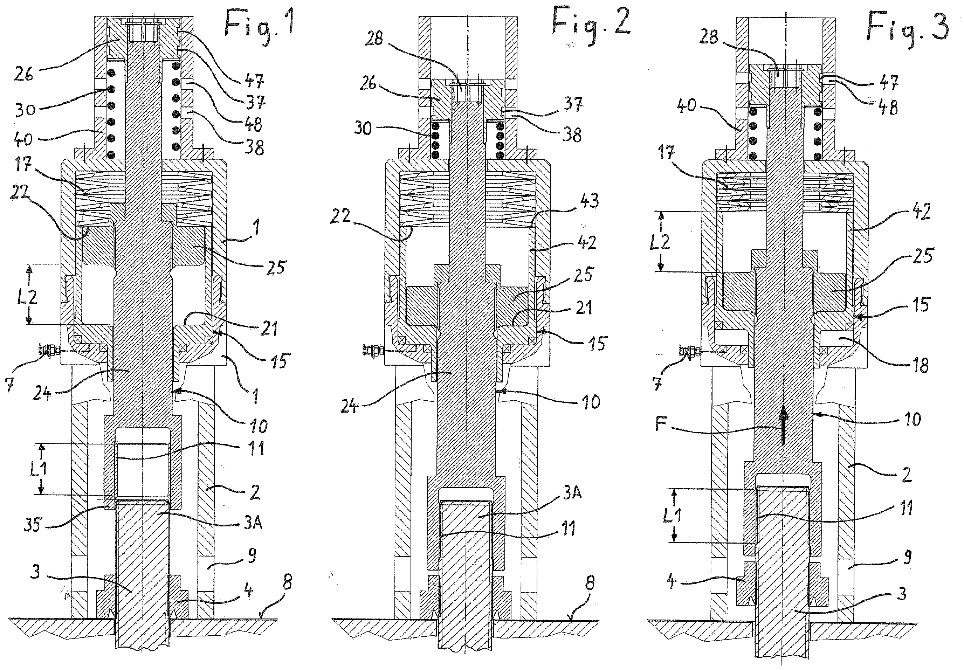

Die hier beschriebene, hydraulisch zu betreibende Spannvorrichtung dient dem Anziehen, vor allem Nachziehen, und ggf. auch dem Lösen hochbelasteter Schraubverbindungen. Mit der Spannvorrichtung lässt sich in Bolzenlängsrichtung für eine gewisse Zeit eine vorgegebene Vorspannkraft F (Fig. 3) auf einen Gewindebolzen 3 aufbringen, um währenddessen eine auf den Gewindebolzen 3 aufgeschraubte Mutter 4 der Schraubverbindung anzuziehen bzw. nachzuziehen.

Eine zentral in der Spannvorrichtung angeordnete Wechselbuchse 10 ist an ihrem einen Ende mit einem Buchsenabschnitt mit einem Innengewinde 11 versehen. Das Innengewinde 11 wird vor Beginn des Spannprozesses auf einen über die Mutter 4 hinaus vorstehenden Gewindeendabschnitt 3A des Gewindebolzens 3 aufgeschraubt. Anschließend wird die so auf den Gewindebolzen 3 aufgeschraubte Wechselbuchse 10 hydraulisch unter Aufwendung der Kraft F unter Zug gesetzt, wodurch sich der Gewindebolzen 3 in Längsrichtung dehnt bzw. axial angezogen wird. Die Unterseite der Mutter 4 kommt dadurch frei, so dass sich die Mutter 4 nahezu widerstandsfrei drehen und auf diese Weise nachziehen lässt.

Umschlossen ist der hydraulische Spannmechanismus von einem druckfesten Zylindergehäuse 1. Dieses kann sich modulartig aus mehreren Zylinderabschnitten zusammensetzen. Die starre Fortsetzung des Zylindergehäuses 1 nach unten bildet ein die Mutter umgebendes Stützrohr 2. Das Stützrohr 2 kann einstückig mit dem Zylindergehäuse 1 sein, oder alternativ ein gegenüber dem Zylindergehäuse 1 separates, z. B. ein daran ansetzbares Bauteil sein. Das Stützrohr 2 ist an seiner Unterseite offen und stützt sich auf einer festen Unterlage 8 ab, die beim Spannprozess als Widerlager dient. Bei dem hier beschriebenen Ausführungsbeispiel ist die Unterlage 8 jenes Maschinenteil, auf dem sich auch die Mutter 4 mit ihrer Unterseite abstützt. Außerdem kann ein durch eine Öffnung 9 in dem Stützrohr 2 hindurch arbeitendes Getriebe vorhanden sein, mit dem sich die Mutter 4 drehen lässt. Dieses Drehen ist natürlich nur möglich, wenn die Spannvorrichtung arbeitet, also den Bolzen dehnt, und daher die Mutter 4 nicht durch erhebliche Reibung belastet ist.

Seitlich an dem Zylindergehäuse 1 befindet sich ein Hydraulikanschluss 7, über den der hydraulische Arbeitsraum der Spannvorrichtung ventilgesteuert mit einer externen Hydraulikversorgung verbunden ist.

Das Zylindergehäuse 1 umfasst einen oder alternativ auch mehrere Hydraulikzylinder, die über den Hydraulikanschluss 7 und eine flexible, druckfeste Hydraulikleitung mit der externen Hydraulikversorgung verbunden sind. In jedem Hydraulikzylinder ist, zu der Zylinderinnenwand hin abgedichtet, ein Kolben 15 in Längsrichtung beweglich angeordnet. Bei dem hier beschriebenen Ausführungsbeispiel ist nur eine Zylinderstufe und daher auch nur ein Kolben 15 vorhanden.

Durch Einspeisen von hydraulischem Druck in den hydraulischen Arbeitsraum 18 des Zylinders wird der Kolben 15 angehoben. Dies erfolgt entgegen der Druckkraft einer von oben her den Kolben 15 beaufschlagenden, starken Feder 17. Die Feder 17 besteht hier aus aufeinandergeschichteten und damit in Reihe geschalteten, ringförmigen Tellerfedern. Die Feder 17 dient als Kolbenrückstellfeder und beaufschlagt den Kolben 15 unmittelbar mit einer Kraft die bestrebt ist, den Kolben 15 in der in Fig. 1 und in Fig. 2 wiedergegebenen Grundstellung zu halten, in der der hydraulische Arbeitsraum 18 sein Minimum hat.

Der Kolben 15 umgibt ringförmig die Wechselbuchse 10. Er ist an seinem Innenrand mit einer umlaufenden Stufe versehen, die, der Unterlage 8 abgewandt, eine Mitnehmerfläche 21 bildet, an der sich die Wechselbuchse 10 über einen daran befestigten, radial erweiterten Abschnitt 25 abstützt. Auf diese Weise ist die Wechselbuchse 10 durch den Kolben 15 axial mitnehmbar.

Die Wechselbuchse ist dreiteilig aufgebaut und setzt sich aus einem schlanken Grundkörper 24, einem den radial erweiterten Abschnitt 25 bildenden Flansch und einem Endstück 26 zusammen.

Der Grundkörper 24 der Wechselbuchse befindet sich zentral auf der Längsachse der Spannvorrichtung, und ist an seinem bolzenseitigen Ende mit dem Innengewinde 11 zum Aufschrauben auf den Gewindebolzen 3 versehen. Der den radial erweiterten Abschnitt 25 bildende Flansch ist auf den Grundkörper 24 aufgeschraubt, so dass sich insoweit eine starre Einheit ergibt. Das Endstück 26 befindet sich an dem anderen, also dem Gewinde 11 abgewandten Ende der Wechselbuchse 10. Auch das Endstück 26 ist mit dem Grundkörper 24 verschraubt, und bildet daher mit diesem eine starre Einheit.

An ihrem oberen Ende ist die Wechselbuchse 10 mit einem Mehrkant 28 versehen, an den sich ein handelsübliches Werkzeug ansetzen lässt, um einerseits die Wechselbuchse 10 gegenüber dem Zylindergehäuse 1 zu drehen, und um andererseits die Wechselbuchse 10 in Längsrichtung zu dem Gewindebolzen 3 hin zu bewegen. Diese Bewegung erfolgt bei dem hier beschriebenen Ausführungsbeispiel entgegen der Kraft einer Feder 30, die mit ihrem ersten Ende gegen die Wechselbuchse 10, und mit ihrem zweiten Ende gegen das Zylindergehäuse 1 abgestützt ist. Die Feder 30 sorgt dafür, dass die Wechselbuchse 10 normalerweise eine Stellung einnimmt, in der sie an dem zweiten Längsanschlag 22 abgestützt ist.

Die Funktion des zweiten Längsanschlags 22 hat hier die Unterseite der starken Feder 17, welche den Kolben 15 beaufschlagt. Diese Feder 17 ist deutlich stärker bzw. steifer als die gegen die Wechselbuchse anliegende Feder 30.

Die Feder 30 ist als Schraubenfeder ausgebildet, die einen schlanken Längsabschnitt der Wechselbuchse 10 umgibt. Die Abstützung der Feder 30 an der Wechselbuchse erfolgt nicht unmittelbar am Grundkörper 24 der Wechselbuchse, sondern an dem einen Bund der Wechselbuchse bildenden Endstück 26.

Der Kolben 15 ist mit einer Wandung 42 versehen, die einen Hohlraum umschließt und sich in Längsrichtung bis zu einer Stirnfläche 43 erstreckt, gegen die die Feder 17 mit ihrem unteren Ende abgestützt ist. Mit ihrem anderen Ende ist die Feder 17 von innen gegen eine Fläche des Zylindergehäuses 1 abgestützt. Die Außenseite der Wandung 42 ist zylindrisch, und bildet mit der Innenwand des Zylindergehäuses 1 einen Teil der Längsführung des Kolbens 15.

Um beim Aufsetzen des Schraubenspannzylinders auf die Verschraubung, was in Fig. 1 wiedergegeben ist, ein hartes Aufeinanderstoßen des Gewindes 11 der Wechselbuchse 10 auf die äußeren Gewindegänge des Gewindebolzens 3 zu vermeiden und so zu verhindern, dass es zu Beschädigungen an den Gewindegängen kommt, ist der Längsweg L2, auf dem sich der Abschnitt 25 der Wechselbuchse zwischen seiner Anlage am ersten Längsanschlag 21 und seiner Anlage am zweiten Längsanschlag 22 maximal in Längsrichtung bewegen kann, mindestens gleich der Traglänge L1 des Innengewindes 11, und vorzugsweise etwas größer als diese Traglänge. Als Traglänge L1 wird hier jene Länge bezeichnet, auf welcher das Gewinde 11 in Eingriff mit dem Gewindebolzen 3 steht, wenn die Wechselbuchse 10 vollständig auf den Gewindeendabschnitt 3A aufgeschraubt ist.

Indem die Wechselbuchse 10 relativ zu dem Kolben 15 längsbeweglich angeordnet ist, kann die Wechselbuchse 10 innerhalb der Spannvorrichtung eine Grundstellung einnehmen, in der sie nicht an dem Kolben 15 anliegt, sondern mit ihrem Abschnitt 25 an dem zweiten Längsanschlag 22 anliegt. Auf diese Weise kann es während des Aufsetzens der Spannvorrichtung noch zu keinem Kontakt zwischen dem Gewinde 11 der Wechselbuchse und den Gewindegängen des Gewindeendabschnitts 3A kommen, so dass in dieser in Fig. 1 wiedergegebenen Montagesituation Beschädigungen ausgeschlossen sind. Dem steht nicht entgegen, dass das Innengewinde 11 nicht bis an das äußerste Ende der Wechselbuchse 10 reicht, sondern sich dort noch ein kurzer, gewindeloser Bund 35 befindet, der in der Situation nach Fig. 1 den Gewindebolzen 3 etwas in Längsrichtung überdeckt. Der Bund 35 dient der vereinfachten Anfangszentrierung der Spannvorrichtung auf dem Gewindebolzen 3. Er ist aber, da er keine Gewindestruktur aufweist, ungeeignet, um die äußeren Gewindegänge des Gewindebolzens 3 zu beschädigen.

Ist entsprechend Fig. 1 die Spannvorrichtung in Fluchtung zu dem Gewindebolzen 3 auf der Unterlage 8 abgesetzt, erfolgt in einem nächsten Schritt, welcher in Fig. 2 wiedergegeben ist, das Aufschrauben der Wechselbuchse 10 auf den Gewindeendabschnitt 3A. Hierzu wird ein entsprechendes Werkzeug, z. B. ein Schraubwerkzeug, an die Schlüsselfläche 28 angesetzt und mit diesem die Wechselbuchse 10 zunächst in Richtung zu dem Gewindebolzen 3 hin bewegt, bis es zum Eingriff des Innengewindes 11 in das Außengewinde des Bolzens 3 kommt. Weiteres Drehen des Werkzeugs führt dann zu einem Verschrauben, wobei der Abschnitt 25 der Wechselbuchse 10 innerhalb des Hohlraums des Kolbens 15 den Längsweg L2 durchfährt, bis schließlich der Abschnitt 25 gegen den ersten Längsanschlag 21 gelangt. In dieser Situation, die in Fig. 2 wiedergegeben ist, greift das Innengewinde 11 auf seiner vollen Gewindetraglänge L1 in das Außengewinde des Bolzens 3.

In dieser Situation nach Fig. 2 steht eine an dem Endstück 26 angeordnete Markierung 37 genau in Höhe eines Sichtfensters 38, welches sich in einer Hülse 40 befindet. Die Hülse 40 ist an dem Zylindergehäuse 1 befestigt und umgibt den dem Innengewinde 11 abgewandten Endabschnitt der Wechselbuchse 10. Die auf Seiten der Wechselbuchse vorhandene Markierung 37 ist hier eine in einer Umfangsnut des Endstücks 26 angeordnete Farb- oder Kontrastmarkierung. Auch die Nut selbst eignet sich als Markierung 37, sofern sie ausreichend durch das die Gegenmarkierung bildende Sichtfenster 38 der Hülse 40 hindurch, erkennbar ist. Befinden sich gemäß Fig. 2 beide Markierungen 37, 38 hintereinander in derselben Höhe, zeigt dies dem Gerätebediener an, dass die Wechselbuchse 10 vollständig, d. h. auf ihrer gesamten Gewindetraglänge L1, mit dem Gewindeendabschnitt 3A des Gewindebolzens verschraubt ist, und der Spannprozess beginnen kann.

In Fig. 3 ist dieser Spannprozess wiedergegeben. Unter dem hydraulischen Druck in dem Arbeitsraum 18 wird der Kolben 15 angehoben, wobei er die an der Mitnehmerfläche 21 abgestützte Wechselbuchse mitnimmt. Es kommt zu einem Dehnen bzw. Anziehen des Gewindebolzens 3 und dem Bilden eines Spalts zwischen der Unterseite der Mutter 4 und der Unterlage 8. Die Mutter 4 kann dann, vorzugsweise durch die Öffnungen 9 hindurch, durch kraftfreies Drehen nachgezogen werden.

Zweite Markierungen 47, 48, die sich unterhalb bzw. oberhalb der bereits beschriebenen Markierungen 37, 38 befinden, dienen der Kontrolle des Spannprozesses. Denn befindet sich die ringförmige Markierung 47 der Wechselbuchse in Höhe des als Gegenmarkierung dienenden Sichtfensters 48 der Hülse 40, wird durch diese Zuordnung sichtbar und dem Maschinenbediener mitgeteilt, dass der maximal zulässige Spannweg erreicht ist.

### Bezugszeichenliste

- 1: Zylindergehäuse
- 2: Stützrohr
- 3: Gewindebolzen
- 3A: Gewindeendabschnitt
- 4: Mutter
- 7: Hydraulikanschluss
- 8: Unterlage
- 9: Öffnung
- 10: Wechselbuchse
- 11: Innengewinde
- 15: Kolben
- 17: Feder
- 18: hydraulischer Arbeitsraum
- 21: Mitnehmerfläche, erster Längsanschlag
- 22: zweiter Längsanschlag
- 24: Grundkörper
- 25: radial erweiterter Abschnitt
- 26: Endstück
- 28: Mehrkant, Schlüsselfläche
- 30: Feder
- 35: Bund
- 37: Markierung
- 38: Markierung
- 40: Hülse
- 42: Wandung
- 43: Stirnfläche
- 47: Markierung
- 48: Markierung

- F: Vorspannkraft
- L1: Gewindetraglänge
- L2: Längsweg

## Patentansprüche

1. Spannvorrichtung zum Dehnen eines Gewindebolzens durch Zug an dessen Gewindeendabschnitt, mit einem gegen eine feste Unterlage (8) als Widerlager abgestützten Zylindergehäuse (1) mit mindestens einem darin in Längsrichtung bewegbaren, mit einer Hydraulikversorgung verbindbaren Kolben (15), und mit einer Wechselbuchse (10), die zentral durch den Kolben (15) hindurchführt, an ihrem Ende mit einem Innengewinde (11) mit einer auf den Gewindeendabschnitt aufschraubbaren Traglänge (L1), sowie mit einem radial erweiterten Abschnitt (25) zur axialen Mitnahme durch eine an dem Kolben (15) ausgebildete Mitnehmerfläche (21) versehen ist, wobei die Wechselbuchse (10) längsbeweglich zu dem Kolben (15) ist, wobei der Längsweg (L2) der Wechselbuchse (10) einerseits durch die Mitnehmerfläche (21) als ersten Längsanschlag und andererseits durch einen zweiten Längsanschlag (22) begrenzt ist, und der Längsweg (L2) mindestens gleich und vorzugsweise größer als die Traglänge (L1) des Innengewindes (11) der Wechselbuchse (10) ist, **dadurch gekennzeichnet, dass** die Wechselbuchse (10) unter der Kraft einer Feder (30) gegen den zweiten Längsanschlag (22) abgestützt ist.

2. Spannvorrichtung nach Anspruch 1, **dadurch gekennzeichnet, dass** die Feder (30) schwächer ist als eine Feder (17), welche gegen den Kolben (15) einerseits und gegen das Zylindergehäuse (1) andererseits abgestützt ist.

3. Spannvorrichtung nach Anspruch 1 oder 2, **dadurch gekennzeichnet, dass** die Feder (30) eine Schraubenfeder ist, welche einen Längsabschnitt der Wechselbuchse (10) umgibt und mit ihrem ersten Ende gegenüber der Wechselbuchse (10) abgestützt ist.

4. Spannvorrichtung nach Anspruch 3, **dadurch gekennzeichnet, dass** die Feder (30) mit ihrem zweiten Ende gegen eine Fläche an dem Zylindergehäuse (1) abgestützt ist.

5. Spannvorrichtung nach Anspruch 3, **dadurch gekennzeichnet, dass** das erste Ende der Feder (30) gegen einen Bund abgestützt ist, mit dem die Wechselbuchse (10) an ihrem dem Innengewinde (11) abgewandten Ende versehen ist.

6. Spannvorrichtung nach Anspruch 5, **dadurch gekennzeichnet, dass** der Bund an einem Endstück (26) ausgebildet ist, welches an der Wechselbuchse (10) befestigt ist, vorzugsweise über eine Verschraubung.

7. Spannvorrichtung nach einem der vorangehenden Ansprüche, **dadurch gekennzeichnet, dass** der Kolben (15) zur Aufnahme des radial erweiterten Abschnitts (25) der Wechselbuchse (10) einen Hohlraum von solcher Länge aufweist, dass der Längsabschnitt (25) darin über den Längsweg (L2) beweglich ist, dass der Hohlraum von einer Wandung (42) des Kolbens (15) umschlossen ist, die sich bis zu einer Stirnfläche (43) erstreckt, und dass eine Feder (17) gegen die Stirnfläche (43) einerseits und gegen das Zylindergehäuse (1) andererseits abgestützt ist.

8. Spannvorrichtung nach Anspruch 7, **dadurch gekennzeichnet, dass** die Außenseite der Wandung (42) zylindrisch ist und mit der Innenwand des Zylindergehäuses (1) eine Längsführung des Kolbens (15) bildet.

9. Spannvorrichtung nach einem der vorangehenden Ansprüche, **gekennzeichnet durch** eine an dem Zylindergehäuse (1) befestigte Hülse (40), welche einen dem Innengewinde (11) abgewandten Endabschnitt der Wechselbuchse (10) umgibt, wobei der Endabschnitt einerseits und die Hülse (40) andererseits mit aufeinander bezogenen Markierungen (37, 38; 47, 48) versehen sind.

10. Spannvorrichtung nach Anspruch 9, **dadurch gekennzeichnet, dass** die Markierung (37, 47) an der Wechselbuchse (10) eine optische Markierung und vorzugsweise eine Farb- oder Kontrastmarkierung, und die Markierung (38, 48) an der Hülse (40) ein Sichtfenster ist.

11. Spannvorrichtung nach Anspruch 10, **dadurch gekennzeichnet, dass** die optische Markierung (37) in dem Sichtfenster (38) nur dann von außen sichtbar ist, wenn die Wechselbuchse (10) an der Mitnehmerfläche (21) anliegt.

## Claims

1. Tensioning device for extending a threaded bolt by tensile stress on its threaded end portion, with a cylindrical housing (1) which is supported as an abutment against a fixed base (8) and has at least one piston (15) which is movable therein in a longitudinal direction and can be connected to a hydraulic supply, and with an interchangeable sleeve (10) which passes centrally through the piston (15) which has at its end an internal thread (11) having an engagement length (L1) which can be screwed onto the threaded end portion, and with a radially expanded portion (25) for axial entrainment by an entraining face (21) formed on the piston (15), wherein the interchangeable sleeve (10) is longitudinally movable relative to the piston (15), wherein the longitudinal travel (L2) of the interchangeable sleeve (10) is delimited on the one hand by the entraining face (21) as a first longitudinal stop and on the other hand by a second longitudinal stop (22), and the longitudinal travel (L2) is at least equal to and preferably greater than the engagement length (L1) of the internal thread (11) of the interchangeable sleeve (10), **characterised in that** the interchangeable sleeve (10) is supported by the force of a spring (30) against the second longitudinal stop (22).

2. Tensioning device according to claim 1, **characterised in that** the spring (30) is weaker than a spring (17) which is supported against the piston (15) on the one hand and against the cylindrical housing (1) on the other hand.

3. Tensioning device according to claim 1 or 2, **characterised in that** the spring (30) is a helical spring which surrounds a longitudinal portion of the interchangeable sleeve (10) and is supported with its first end with respect to the interchangeable sleeve (10).

4. Tensioning device according to claim 3, **characterised in that** the spring (30) is supported with its second end against a face of the cylindrical housing (1).

5. Tensioning device according to claim 3, **characterised in that** the first end of the first spring (30) is supported against a collar which is provided on the interchangeable sleeve (10) at the end thereof which is remote from the internal thread (11).

6. Tensioning device according to claim 5, **characterised in that** the collar is formed on an end piece (26) which is fastened to the interchangeable sleeve (10), preferably by means of a screw connection.

7. Tensioning device according to one of the preceding claims, **characterised in that** in order to accommodate the radially expanded portion (25) of the interchangeable sleeve (10) the piston (15) has a cavity of a length such that the longitudinal portion (25) is movable therein over the longitudinal travel (L2), **in that** the cavity is surrounded by a wall (42) of the piston (15) which extends as far as an end face (43), and **in that** a spring (17) is supported against the end face (43) on the one hand and against the cylindrical housing (1) on the other hand.

8. Tensioning device according to claim 7, **characterised in that** the outside of the wall (42) is cylindrical and, with the inner wall of the cylindrical housing (1), forms a longitudinal guide of the piston (15).

9. Tensioning device according to one of the preceding claims, **characterised by** a socket (40) which is fastened to the cylindrical housing (1) and surrounds an end portion of the interchangeable sleeve (10) remote from the internal thread (11), wherein the end portion on the one hand and the socket (40) on the other hand are provided with markings (37, 38; 47, 48) which are associated with one another.

10. Tensioning device according to claim 9, **characterised in that** the marking (37. 47) on the interchangeable sleeve (10) is an optical marking and is preferably a colour or contrast marking, and the marking (38, 48) on the socket (40) is a viewing window.

11. Tensioning device according to claim 10, **characterised in that** the optical marking (37) is visible from outside in the viewing window (38) only when the interchangeable sleeve (10) bears on the entraining face (21).

## Revendications

1. Dispositif de serrage pour la rotation d'une tige filetée par traction au niveau de sa portion d'extrémité filetée, muni d'un carter de cylindre (1) appuyé contre un support fixe (8) en tant que contre-palier, d'au moins un piston (15) mobile à l'intérieur dans la direction longitudinale et pouvant être relié avec une alimentation hydraulique et d'une douille (10) qui traverse le centre du piston (15), d'une longueur de support (L1) pouvant être vissée à son extrémité avec un filetage interne (11), ainsi que d'une portion élargie radialement (25) conçue pour l'entraînement axial par une surface d'entraînement (21) réalisée sur le piston (15),
la douille (10) étant mobile longitudinalement par rapport au piston (15), le trajet longitudinal (L2) de la douille (10) étant limité d'une part par la surface d'entraînement (21) en tant que première butée longitudinal e et d'autre part par une deuxième butée longitudinale (22) et le trajet longitudinal (L2) étant au moins égal et de préférence supérieur à la longueur de support (L1) du filetage interne (11) de la douille (10), **caractérisé en ce que** la douille (10) s'appuie contre la deuxième butée longitudinale (22) sous l'action de la force d'un ressort (30).

2. Dispositif de serrage selon la revendication 1, **caractérisé en ce que** le ressort (30) est plus faible qu'un ressort (17) qui s'appuie d'une part contre le piston (15) et d'autre part contre le carter de cylindre (1).

3. Dispositif de serrage selon la revendication 1 ou 2, **caractérisé en ce que** le ressort (30) est ressort hélicoïdal qui entoure une portion longitudinale de la douille (10) et qui s'appuie, avec sa première extrémité, en face de la douille (10).

4. Dispositif de serrage selon la revendication 3, **caractérisé en ce que** le ressort (30) s'appuie, avec sa deuxième extrémité, contre une surface sur le carter de cylindre (1).

5. Dispositif de serrage selon la revendication 3, **caractérisé en ce que** la première extrémité du ressort (30) s'appuie contre une collerette, avec lequel la douille (10) est munie au niveau de son extrémité opposée au filetage interne (11).

6. Dispositif de serrage selon la revendication 5, **caractérisé en ce que** la collerette est réalisée au niveau d'un élément d'extrémité (26) qui est fixé à la douille (10), de préférence par l'intermédiaire d'une liaison vissée.

7. Dispositif de serrage selon l'une des revendications précédentes, **caractérisé en ce que** le piston (15) comprend, pour le logement de la portion élargie radialement (25) de la douille (10), un espace creux d'une longueur telle que la portion longitudinale (25) y soit mobile sur le trajet longitudinal (L2), **en ce que** l'espace creux est entouré d'une paroi (42) du piston (15) qui s'étend jusqu'à une surface frontale (43) et **en ce qu'**un ressort (17) s'appuie d'une part contre la surface frontale (43) et d'autre part contre le carter du cylindre (1).

8. Dispositif de serrage selon la revendication 7, **caractérisé en ce que** l'extérieur de la paroi (42) est cylindrique et forme, avec la paroi interne du carter de cylindre (1), un guidage longitudinal du piston (15).

9. Dispositif de serrage selon l'une des revendications précédentes, **caractérisé par** un manchon (40) fixé au carter de cylindre (1) qui entoure une portion d'extrémité de la douille (10) opposée au filetage interne (11), la portion d'extrémité d'une part et le manchon (40) d'autre part étant munis de repères correspondants (37, 38 ; 47, 48).

10. Dispositif de serrage selon la revendication 9, **caractérisé en ce que** le repère (37, 47) sur la douille (10) est un repère optique et de préférence un repère coloré ou par contraste et le repère (38, 48) sur le manchon (40) est une fenêtre de visualisation.

11. Dispositif de serrage selon la revendication 10, **caractérisé en ce que** le repère optique (37) n'est visible de l'extérieur dans la fenêtre de visualisation (38) que lorsque la douille (10) s'appuie contre la surface d'entraînement (21).
